(19) Europäisches Patentamt
European Patent Office
Office européen des brevets

(11) **EP 4 529 111 A1**

(12) **EUROPEAN PATENT APPLICATION**
published in accordance with Art. 153(4) EPC

(43) Date of publication:
**26.03.2025 Bulletin 2025/13**

(21) Application number: **23856110.4**

(22) Date of filing: **26.04.2023**

(51) International Patent Classification (IPC):
**H04L 27/26** (2006.01)

(52) Cooperative Patent Classification (CPC):
**H04L 27/26**

(86) International application number:
**PCT/CN2023/090815**

(87) International publication number:
**WO 2024/041016 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.08.2022 CN 202211033097**

(71) Applicant: **ZTE Corporation**
**Shenzhen, Guangdong 518057 (CN)**

(72) Inventors:
• **XIA, Shuqiang**
**Shenzhen, Guangdong 518057 (CN)**

• **YU, Guanghui**
**Shenzhen, Guangdong 518057 (CN)**
• **HU, Liujun**
**Shenzhen, Guangdong 518057 (CN)**
• **CHEN, Shijun**
**Shenzhen, Guangdong 518057 (CN)**
• **MA, Yihua**
**Shenzhen, Guangdong 518057 (CN)**
• **YUAN, Zhifeng**
**Shenzhen, Guangdong 518057 (CN)**
• **CHEN, Dawei**
**Shenzhen, Guangdong 518057 (CN)**

(74) Representative: **Aipex B.V.**
**Vestdijk 51**
**5611 CA Eindhoven (NL)**

(54) **SIGNAL TRANSMISSION METHOD, AND DEVICE AND STORAGE MEDIUM**

(57) Provided are a signal transmission method, a device, and a storage medium. The signal transmission method applied by a sending end includes determining a first-type subcarrier set and a second-type subcarrier set among transmission symbols, where a second-type subcarrier carries such a generated target signal that a signal on a sample point of a sequence obtained from superposition of a time-domain sequence corresponding to the target signal and a time-domain sequence corresponding to a communication signal carried by a first-type subcarrier satisfies a preset feature; and sending the communication signal and the target signal carried by the transmission symbols to a receiving end.

Determine a first-type subcarrier set and a second-type subcarrier set among transmission symbols — S110

Send the communication signal and the target signal carried by the transmission symbols to a receiving end — S120

**FIG. 1**

EP 4 529 111 A1

**Description**

This application claims priority to Chinese Patent Application No. 202211033097.7 filed with the China National Intellectual Property Administration (CNIPA) on Aug. 26, 2022, the disclosure of which is incorporated herein by reference in its entirety.

TECHNICAL FIELD

The present application relates to the field of communications, for example, a signal transmission method, a device, and a storage medium.

BACKGROUND

For communications, orthogonal frequency-division multiplexing (OFDM) waveforms can be reused in existing fifth-generation mobile communication technology (5G) and beyond 5G (B5G) systems. However, a cyclic prefix in a communication system does not take into account the sensing requirements, resulting in a limited maximum sensing distance for an integrated sensing and communication system due to a small cyclic prefix. While it is possible solve this problem by increasing the cyclic prefix, the existing frame structure of the system is disrupted, leading to a compatibility problem. Therefore, it is essential to find a way to flexibly support various sensing or communication distances while maintaining compatibility with the existing frame structure of a New Radio (NR) system.

SUMMARY

In view of this, embodiments of the present application provide a signal transmission method, a device, and a storage medium that flexibly support various sensing or communication distances while maintaining compatibility with the existing frame structure.

An embodiment of the present application provides a signal transmission method applied by a sending end. The method includes determining a first-type subcarrier set and a second-type subcarrier set among transmission symbols, where a second-type subcarrier carries a generated target signal, and a signal on a sample point of a sequence obtained from superposition of a time-domain sequence corresponding to the target signal and a time-domain sequence corresponding to a communication signal carried by a first-type subcarrier satisfies a preset feature; and sending the communication signal and the target signal carried by the transmission symbols to a receiving end.

An embodiment of the present application provides a signal transmission method applied by a receiving end. The method includes receiving a communication signal and a target signal carried by transmission symbols and sent by a sending end.

The OFDM symbols include a first-type subcarrier set and a second-type subcarrier set, and a second-type subcarrier in the second-type subcarrier set carries such a generated target signal that a signal on a sample point of a sequence obtained from superposition of a time-domain sequence corresponding to the target signal and a time-domain sequence corresponding to the communication signal carried by a first-type subcarrier in the first-type subcarrier set satisfies a preset feature.

An embodiment of the present application provides a communication device. The communication device includes a memory and one or more processors.

The memory is configured to store one or more programs.

When executed by the one or more processors, the one or more programs cause the one or more processors to perform the method of any previous embodiment.

An embodiment of the present application provides a storage medium storing a computer program which, when executed by a processor, causes the processor to perform the method of any previous embodiment.

BRIEF DESCRIPTION OF DRAWINGS

FIG. 1 is a flowchart of a signal transmission method according to an embodiment of the present application.
FIG. 2 is a flowchart of a signal transmission method according to an embodiment of the present application.
FIG. 3 is a diagram of signal transmission configuration according to an embodiment of the present application.
FIG. 4 is a diagram of signal transmission configuration according to an embodiment of the present application.
FIG. 5 is a block diagram of a signal transmission apparatus according to an embodiment of the present application.
FIG. 6 is a block diagram of a signal transmission apparatus according to an embodiment of the present application.

FIG. 7 is a diagram illustrating the structure of a communication device according to an embodiment of the present application.

DETAILED DESCRIPTION

Embodiments of the present application are described hereinafter in conjunction with drawings. The present application is described hereinafter in conjunction with embodiments and drawings. The examples described hereinafter are intended to explain the present application and not to limit the scope of the present application.

During the design process of sensing waveforms, sensing waveforms for integrated sensing and communication can be configured using the OFDM waveform as the main structure to reduce the complexity of hardware integration. For communications, OFDM waveforms can reuse the design of existing 5G/B5G systems. However, since the cyclic prefix in communication systems does not take sensing requirements into account, a drawback of configuring the sensing waveforms for integrated sensing and communication based on the OFDM waveform lies in that the maximum sensing distance of the integrated system is limited by the cyclic prefix. From a communication perspective, the length of the cyclic prefix only needs to exceed the delay spread of the wireless channel. If this design is applied to a communication system, a limited maximum sensing distance for an integrated sensing and communication system or significant resource overhead easily occurs. This is because, for the sensing system, the maximum sensing distance is constrained by the length of the cyclic prefix. Based on a 5G system, Table 1 describes the maximum sensing distance corresponding to each of the cyclic prefix intervals for different subcarrier spacings.

Table 1 Relationship between subcarrier spacing, cyclic prefix interval, and maximum sensing distance

| Subcarrier Spacing (kHz) | 15 | 30 | 60 | 120 |
|---|---|---|---|---|
| Cyclic Prefix Type 1 (us) | 4.6875 | 2.34 | 1.17 | 0.58 |
| Maximum Sensing Distance (m) | 703 | 351 | 175 | 87 |
| Cyclic Prefix Type 2 (us) | 16.6667 | 8.33 | 4.17 | 2.08 |
| Maximum Sensing Distance (m) | 2500 | 1250 | 625 | 312.5 |

From Table 1, it can be seen that existing 5G supports only two types of cyclic prefixes. While it is possible to increase the types or lengths of cyclic prefixes to solve the problems of limited sensing distance or excessive overhead, the frame structure of an NR system is disrupted, the complexity of system design is increased, and consequently the performance of the communication system is severely affected. In view of this, the present application provides a signal transmission scheme compatible with the existing frame structure of the NR system while flexibly supporting various sensing distances.

It is to be noted that the term "carry" in this embodiment of the present application can also be understood as "bear".

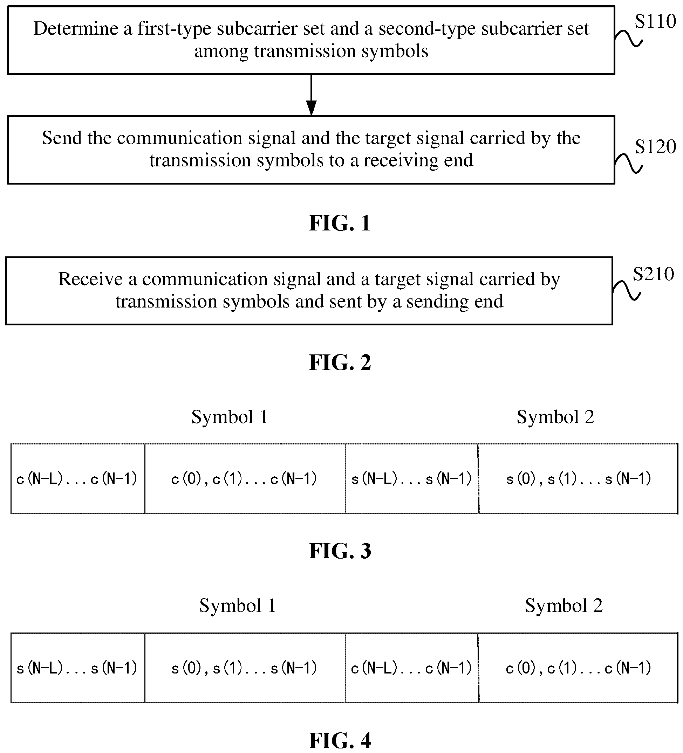

FIG. 1 is a flowchart of a signal transmission method according to an embodiment of the present application. This embodiment is applied to the case of flexibly supporting various sensing distances. This embodiment may be implemented by a sending end. By way of example, the sending end may be a terminal or a base station. In an embodiment, the sender is a terminal, and the receiver is a base station. In an embodiment, the sender is a base station, and the receiver is a terminal.

As shown in FIG. 1, this embodiment includes S110 and S120.

In S110, a first-type subcarrier set and a second-type subcarrier set among transmission symbols are determined.

A second-type subcarrier in the second-type subcarrier set carries a generated target signal, a signal on a sample point of a sequence obtained from superposition of a time-domain sequence corresponding to the target signal and a time-domain sequence corresponding to the communication signal carried by a first-type subcarrier in the first-type subcarrier set satisfies a preset feature.

In an embodiment, the transmission symbols refer to symbols for subcarrier division. For example, the transmission symbols may be OFDM symbols. The second-type subcarrier in the second-type subcarrier set is used for extending the cyclic prefix length or cyclic suffix length of other transmission symbols adjacent to the transmission symbols (that is, extending the cyclic prefix length of other transmission symbols after the transmission symbols or extending the cyclic suffix length of other transmission symbols before the transmission symbols). Moreover, a second-type subcarrier in the second-type subcarrier set carries such a generated target signal that a signal on a sample point of a sequence obtained from superposition of a time-domain sequence corresponding to the target signal and a time-domain sequence corresponding to the communication signal carried by a first-type subcarrier in the first-type subcarrier set satisfies a preset feature, thereby achieving a cyclic prefix extension of the first OFDM symbol after the transmission symbols or a cyclic suffix extension of the first OFDM symbol before the transmission symbols.

The first-type subcarrier set includes one or more first-type subcarriers. The second-type subcarrier set includes a second number of second-type subcarriers. In an embodiment, the first-type subcarrier is used for carrying the communication signal, and the second-type subcarrier is used for carrying the target signal. The second-type subcarrier in the second-type subcarrier set carries such a generated target signal that the signal on the sample point of the sequence obtained from superposition of the time-domain sequence corresponding to the target signal and the time-domain sequence corresponding to the communication signal carried by the first-type subcarrier in the first-type subcarrier set satisfies the preset feature.

In an embodiment, from an available subcarrier set among the transmission symbols, some subcarriers are selected as the first-type subcarrier set, and some subcarriers are selected as the second-type subcarrier set. Subcarriers in the first-type subcarrier set do not overlap subcarriers in the second-type subcarrier set. In an embodiment, a second number of subcarriers are reserved among the transmission symbols, and the target signal is transmitted on these subcarriers, so that the last first number of sample points among the transmission symbols are the cyclic prefix extension of other transmission symbols adjacent to the transmission symbols, that is, the last first number of sample points among the transmission symbols can be used as the cyclic prefix of other transmission symbols adjacent to the transmission symbols; or so that the first certain number of sample points among the transmission symbols are the cyclic suffix extension of other transmission symbols adjacent to the transmission symbols, that is, the first certain number of sample points among the transmission symbols can be used as the cyclic suffix of other transmission symbols adjacent to the transmission symbols.

In S120, the communication signal and the target signal carried by the transmission symbols are sent to a receiving end.

In an embodiment, the sending end uses the inverse discrete Fourier transform to superimpose the time-domain sequence corresponding to the target signal and the time-domain sequence corresponding to the communication signal carried by the first-type subcarrier to obtain the signal that satisfies the preset feature. The length of the target signal for extending the cyclic prefix length of other transmission symbols adjacent to the transmission symbols may be increased or decreased with a granularity of a single sample point. For the receiving end of the communication signal, the signal may be received using a traditional cyclic prefix without modification, thus maintaining compatibility with the existing system.

In an embodiment, determining the target signal includes: obtaining a third time-domain sequence based on a generated first time-domain sequence and a generated second time-domain sequence, where the first time-domain sequence is a subset of the time-domain sequence corresponding to the communication signal carried by the first-type subcarrier, and the second time-domain sequence is a time-domain sequence determined based on the signal that satisfies the preset feature; and determining the target signal based on the third time-domain sequence and a pregenerated target matrix, where the target matrix is composed of a first number of rows and a second number of columns extracted from a preset inverse Fourier transform matrix, where the first number is the length of the first time-domain sequence, the second time-domain sequence, or the third time-domain sequence, the second number is the number of second-type subcarriers in the second-type subcarrier set, and the second number is greater than or equal to the first number.

In an embodiment, the communication symbol is mapped to the first-type subcarrier to obtain the time-domain sequence corresponding to the first-type subcarrier set, and a first number of elements are extracted from this time-domain sequence to obtain the corresponding first time-domain sequence. The first time-domain sequence is a subset of the time-domain sequence corresponding to the communication signal carried by the first-type subcarrier, a second time-domain sequence is determined based on the preset feature, and the length of the second time-domain sequence is the first number, that is, the same length as the first time-domain sequence. Then, the first time-domain sequence is subtracted from the second time-domain sequence to obtain the corresponding third time-domain sequence; and finally, the corresponding target signal is generated based on the conjugate transpose matrix corresponding to the target matrix, the target matrix, and the third time-domain sequence. The length of the third time-domain sequence is the same as the length of the first time-domain sequence and the length of second time-domain sequence, all being the first number.

In an embodiment, the signal transmission method applied by the sending end also includes sending the number and subcarrier indexes of first-type subcarriers in the first-type subcarrier set and the number and subcarrier indexes of second-type subcarriers in the second-type subcarrier set to the receiving end. In an embodiment, the sending end selects some subcarriers as the first-type subcarrier set and some subcarriers as the second-type subcarrier set from an available subcarrier set among the transmission symbols. To enable the receiving end to accurately parse the signal carried by each subcarrier, the sending end may send the number and subcarrier indexes of first-type subcarriers in the first-type subcarrier set and the number and subcarrier indexes of second-type subcarriers in the second-type subcarrier set to the receiving end.

In an embodiment, the first number of sample points among the transmission symbols are configured to 0. In an embodiment, the sending end may configure the last first number of point samples among the transmission symbols to 0, thereby reducing inter-symbol interference of the signal carried by the transmission symbol on signals carried by adjacent transmission symbols. In an embodiment, the sending end may configure the first number of sample points at the front of the transmission symbols to 0, thereby reducing the power overhead of the OFDM symbol in terms of the cyclic prefix. In an embodiment, the sending end may configure the first number of sample points at other positions of the transmission symbols to 0. This is not limited here.

In an embodiment, the signal that satisfies the preset feature includes one of the following: a linear frequency modulated signal, a constant amplitude zero autocorrelation signal, a signal having a cyclic prefix, a cyclic prefix extension of a first symbol after the transmission symbols, a cyclic suffix extension of a first symbol before the transmission symbols, or an all-zero signal. In an embodiment, it is feasible to superimpose the time-domain sequence corresponding to the target signal and the time-domain sequence corresponding to the communication signal carried by the first-type subcarrier to obtain the signal on certain sample points. The signal on the certain sample points may be a linear frequency modulated signal, a constant amplitude zero autocorrelation signal, or a signal having a cyclic prefix. In an embodiment, the length of the signal that satisfies the preset feature is the length of the second time-domain sequence, that is, the length of the signal that satisfies the preset feature is also the first number and is less than or equal to the second number.

In an embodiment, in response to the first number being 1, determining the first-type subcarrier set and the second-type subcarrier set among the transmission symbols includes: acquiring all subcarriers among the transmission symbols to obtain a subcarrier set; and selecting a second number of subcarriers from a subcarrier complement set between the subcarrier set and a preconfigured first-type subcarrier set to obtain the second-type subcarrier set.

In an embodiment, the sending end may acquire all available subcarriers among the transmission symbols to obtain the corresponding subcarrier set; and after removing first-type subcarriers from the subcarrier set, select a second number of subcarriers to form the corresponding second-type subcarrier set.

In an embodiment, in response to the first number being greater than 1, determining the first-type subcarrier set and the second-type subcarrier set among the transmission symbols includes acquiring all subcarriers among the transmission symbols to obtain a subcarrier set; and selecting a second number of subcarriers from the subcarrier set to obtain the second-type subcarrier set.

In an embodiment, the sending end may combine all available subcarriers among the transmission symbols into the corresponding subcarrier set; and select a second number of subcarriers from the subcarrier set to form the corresponding second-type subcarrier set.

In an embodiment, a difference value between subcarrier indexes in the second-type subcarrier set satisfies one of the following conditions: an integer multiple of the ratio between the length of a time-domain sequence corresponding to a useful part of the transmission symbols and the number of subcarriers in the second-type subcarrier set; or an integer multiple of a ratio minus one, where the ratio is a ratio between the length of a time-domain sequence corresponding to a useful part of the transmission symbols and the number of subcarriers in the second-type subcarrier set. In an embodiment, the second-type subcarrier set includes a second number of subcarriers. Accordingly, the number of the subcarrier index difference values is the equal to the number of combinations of the second number taken 2 at a time. By way of example, assuming that the second number is denoted as $N_B$, the number of subcarrier index difference values is $C_{N_B}^2$. In an embodiment, the difference value between some subcarrier indexes is an integer multiple of the ratio between the length of the time-domain sequence corresponding to the useful part of the transmission symbols and the number of subcarriers in the second-type subcarrier set. By way of example, assuming that the length of the time-domain sequence corresponding to the useful part of the transmission symbols is denoted as N, and the number of subcarriers in the second-type subcarrier set is denoted as M, then the difference value between some subcarrier indexes is an integer multiple of $\frac{N}{M}$. In an embodiment, the difference value between some subcarrier indexes is an integer multiple of a ratio between the length of a time-domain sequence corresponding to a useful part of the transmission symbols and the number of subcarriers in the second-type subcarrier set minus one. By way of example, assuming that the length of the time-domain sequence corresponding to the useful part of the transmission symbols is denoted as N, and the number of subcarriers in the second-type subcarrier set is denoted as M, then the difference value between some subcarrier indexes is an integer multiple of $\frac{N}{M-1}$.

FIG. 2 is a flowchart of a signal transmission method according to an embodiment of the present application. This embodiment is applied to the case of flexibly supporting various sensing distances. This embodiment may be implemented by a receiving end. By way of example, the receiving end may be a terminal or a base station. In an embodiment, the receiver is a terminal, and the sender is a base station. In an embodiment, the receiver is a base station, and the sender is a terminal.

As shown in FIG. 2, the signal transmission method of this embodiment includes S210.

In S210, a communication signal and a target signal carried by transmission symbols and sent by a sending end are received.

The transmission symbols include a first-type subcarrier set and a second-type subcarrier set, and a second-type subcarrier in the second-type subcarrier set carries, a generated target signal, and a signal on a sample point of a sequence obtained from superposition of a time-domain sequence corresponding to the target signal and a time-domain sequence corresponding to the communication signal carried by a first-type subcarrier in the first-type subcarrier set satisfies a preset feature.

In an embodiment, the signal transmission method applied by the receiving end also includes receiving the number and subcarrier indexes of first-type subcarriers in the first-type subcarrier set and the number and subcarrier indexes of second-type subcarriers in the second-type subcarrier set sent by the sending end.

In an embodiment, determining the target signal includes: obtaining a third time-domain sequence based on a generated first time-domain sequence and a generated second time-domain sequence, where the first time-domain sequence is a subset of the time-domain sequence corresponding to the first-type subcarrier set, and the second time-domain sequence is a time-domain sequence determined based on the signal that satisfies the preset feature; and determining the target signal based on the third time-domain sequence and a pregenerated target matrix. The target matrix is composed of a first number of rows and a second number of columns extracted from a preset inverse Fourier transform matrix, where the first number is the length of the first time-domain sequence, the second time-domain sequence, or the third time-domain sequence, the second number is the number of second-type subcarriers in the second-type subcarrier set, and the second number is greater than or equal to the first number.

In an embodiment, the signal that satisfies the preset feature includes one of the following: a linear frequency modulated signal, a constant amplitude zero autocorrelation signal, a signal having a cyclic prefix, a cyclic prefix extension of a first symbol after the transmission symbols, a cyclic suffix extension of a first symbol before the transmission symbols, or an all-zero signal.

The explanation of parameters such as the transmission symbols, the first-type subcarrier set, the second-type subcarrier set, the first time-domain sequence, and the second time-domain sequence in the signal transmission method applied by the receiving end can be found in the description of these parameters in the previous embodiments of the signal transmission method applied by the sending end and thus is not described again here.

In an embodiment, the base station serves as the sending end, the terminal serves as the receiving end, the transmission symbols are symbols 1, and adjacent transmission symbols are symbols 2. In this embodiment, the process of extending the cyclic prefixes of symbols 2 is explained. Symbols 1 and symbols 2 may be of the same type or of different types. By way of example, symbols 1 may be communication symbols (that is, symbols for transmitting only communication signals) while symbols 2 may be integrated communication-sensing symbols (that is, symbols for transmitting communication signals and sensing signals) or communication symbols. FIG. 3 is a diagram of signal transmission configuration according to an embodiment of the present application. As shown in FIG. 3, it is assumed that the base station continuously sends multiple OFDM symbols. In the diagram shown in FIG. 3, two OFDM symbols are included. Signals sent on the first symbol (that is, symbol 1) are first-type signals, such as communication signals. The time-domain sequence corresponding to the useful part of symbol 1 is $c(0), c(1), \cdots, c(N-1)$. The cyclic prefix length of symbol 1 is L sample points (L > 0), corresponding to the sequence $c(N-L), c(N-L-1), \cdots, c(N-1)$. Signals sent on the second symbol (that is, symbol 2) are second-type signals, such as integrated communication-sensing signals where communication and sensing signals are integrated. The time-domain sequence corresponding to the useful part of this symbols is $s(0), s(1), \cdots, s(N-1)$. The cyclic prefix length of symbol 2 is L sample points, corresponding to the sequence $s(N-L), s(N-L-1), \cdots, s(N-1)$. For symbols 2, the cyclic prefix length must be L + M sample points to satisfy the requirements. Without loss of generality, it is set that 0 < M < N, where M denotes the first number in the previous embodiments.

In this embodiment, the available subcarrier set of symbols 1 is set S. The time-domain sequence generated by the base station using subset A of S (that is, the first-type subcarrier set) is the time-domain sequence corresponding to the first-type subcarrier set. According to the principle of generating OFDM signals, the following formula applies:

$$t(n) = \frac{1}{\sqrt{N}} \sum_{k \in A} T(k) e^{j\frac{2\pi}{N}kn}, 0 \le n \le N-1.$$

Here $T(k)$ is a modulation symbol mapped to subcarrier $k$. These modulation symbols can carry communication information. Here $k$ belongs to subset $A$. It is set that the number of subcarriers in subset A is denoted as $N_A$.

In this embodiment, the subcarrier set reserved for extending the cyclic prefix length of symbol 2 is subset B of set S (that is, the second-type subcarrier set), with these subcarrier indexes denoted as $G(k), k = 0, 1, \cdots, N_B - 1$. Here, $N_B$ denotes the number of subcarriers in subset B. $N_B$ (that is, the second number in the previous embodiments) is not less than M (that is, the first number in the previous embodiments). The elements of subset A do not overlap the elements subset B. The signal mapped to subcarrier $G(k), k = 0, 1, \cdots, N_B - 1$ is denoted as $P(k)$. In the present application, by setting the value of $P(k), k = 0, 1, \cdots, N_B - 1$, the cyclic prefix of symbol 2 can be extended from the current L sample points to L + M sample points. That is, the last M sample points of symbol 1 satisfy:

$$c(N - 1 - m) = s(N - 1 - L - m), m = 0, 1, \cdots, M - 1.$$

In this embodiment, the available subcarrier set of symbols 1 is set S. The time-domain sequence generated by the base station using subset B of S (that is, the second-type subcarrier set) is $p(n)$, $n = 0, 1, \cdots, N - 1$ (the time-domain sequence corresponding to the second-type subcarrier set). According to the principle of generating OFDM signals, the following formula applies:

$$p(n) = \frac{1}{\sqrt{N}} \sum_{k=0}^{N_B - 1} P(k) e^{j \frac{2\pi G(k) n}{N}}, n = 0, 1, \cdots, N - 1.$$

Here $P(k)$ is a modulation symbol mapped to subcarrier $G(k)$. Here $G(k)$ belongs to subset B. It is set that the number of subcarriers in subset B is $N_B$.

For ease of description, the following vectors are defined:

$$P = [P(0), P(1) \cdots P(N_B - 1)]^T;$$

$$t = [t(N - M), t(N - M + 1), \cdots, t(N - 1)]^T;$$

$$d = [s(N - L - M), s(N - L - M + 1), \cdots, s(N - L - 1)]^T;$$

$$z = d - t.$$

T denotes the transpose. t denotes the first time-domain sequence. P denotes the target signal. d denotes the second time-domain sequence. z denotes the third time-domain sequence.

P is determined using the following formulas:

$$P = Q^H (Q Q^H)^{-1} z;$$

$$Q = \frac{1}{\sqrt{N}} \begin{pmatrix} W_N^{-(N-M)G(0)} & W_N^{-(N-M)G(1)} & \cdots & W_N^{-(N-M)G(N_B-1)} \\ W_N^{-(N-M+1)G(0)} & W_N^{-(N-M+1)G(1)} & \cdots & W_N^{-(N-M+1)G(N_B-1)} \\ \cdots & \cdots & \cdots & \cdots \\ W_N^{-(N-1)G(0)} & W_N^{-(N-1)G(1)} & \cdots & W_N^{-(N-1)G(N_B-1)} \end{pmatrix},$$

$$W = \exp\left(-j \frac{2\pi}{N}\right).$$

Here Q denotes an $M * N_B$ matrix that can be obtained by extracting M rows and $N_B$ columns from the N-point inverse Fourier transform matrix. For example, here the rows extracted are from the (N - M)-th row to the (N - 1)-th row, and the column indexes extracted are subcarrier indexes $G(k)$, $k = 0, 1, \cdots, N_B - 1$.

In this embodiment, by reserving not less than M subcarriers on symbols 1 and sending the preceding suggested signals on these subcarriers, the last M sample points on symbols 1 are cyclic extension of the signal cyclic prefixes of symbols 2, that is $c(N - 1 - m) = d(M - 1 - m) = s(N - 1 - L - m)$, $m = 0, 1, 2, \cdots, M - 1$. In other words, the last M sample points of symbols 1 can be used as the cyclic prefixes of symbols 1. In an example, sending the suggested signals P on the second-type subcarriers minimizes the power used under certain conditions of matrix Q. Finally, according to this embodiment, the cyclic prefix length of the target signal can be increased or decreased with a granularity of a single sample point. The communication receiver may receive the communication signal by using the traditional cyclic prefix without modification, thereby maintaining good compatibility with existing systems.

In an embodiment, the base station serves as the sending end, the terminal serves as the receiving end, the transmission symbols are symbols 1, and adjacent transmission symbols are symbols 2. In this embodiment, the process of extending the cyclic suffixes of symbols 1 is explained. Symbols 1 and symbols 2 may be of the same type or of different types. By way of example, symbols 1 may be communication symbols (that is, symbols for transmitting only communication signals) while symbols 2 may be integrated communication-sensing symbols (that is, symbols for transmitting communication signals and sensing signals) or communication symbols. FIG. 4 is a diagram of signal transmission configuration according to an embodiment of the present application. As shown in FIG. 4, it is assumed that the base station continuously sends multiple OFDM symbols. In the diagram shown in FIG. 4, two OFDM symbols are included. Symbols 2 send first-type signals, such as communication signals. The time-domain sequence corresponding to the useful part of symbol 2 is $c(0)$, $c(1)$, $\cdots$, $c(N-1)$. The cyclic prefix length of symbol 2 is L sample points (L > 0), corresponding to the sequence $c(N - L)$, $c(N - L - 1)$, $\cdots$, $c(N - 1)$. Symbols 1 send second-type signals, such as integrated communication-sensing signals where communication and sensing signals are integrated. The time-domain sequence corresponding to the useful part of this symbols is $s(0)$, $s(1)$, $\cdots$, $s(N - 1)$. The cyclic prefix length of symbol 1 is L sample points, corresponding to the sequence $s(N - L)$, $s(N - L - 1)$, $\cdots$, $s(N - 1)$. For symbols 1, the cyclic suffix length must be M sample points to satisfy the requirements. Without loss of generality, it is set that 0 < M < N.

In this embodiment, the available subcarrier set of symbols 2 is set S. The time-domain sequence generated by the base station using subset A of S is $t(0)$, $t(1)$, $\cdots$, $t(N - 1)$. According to the principle of generating OFDM signals, the following formula applies:

$$t(n) = \frac{1}{\sqrt{N}} \sum_{k \in A} T(k) e^{j\frac{2\pi}{N}kn}, 0 \leq n \leq N - 1 \quad (1).$$

Here $T(k)$ is a modulation symbol mapped to subcarrier $k$. These modulation symbols can carry communication information. Here $k$ belongs to subset $A$. It is set that the number of subcarriers in subset A is denoted as $N_A$. In this embodiment, the subcarrier set reserved for extending the cyclic suffix length of symbol 1 is subset B of set S (that is, the second-type subcarrier set), with these subcarrier indexes denoted as $G(k)$, $k = 0, 1, \cdots, N_B - 1$. Here, $N_B$ denotes the number of subcarriers in subset B. $N_B$ (that is, the second number in the previous embodiments) is not less than M (that is, the first number in the previous embodiments). The elements of subset A do not overlap the elements subset B. The signal mapped to subcarrier $G(k)$, $k = 0, 1, \cdots, N_B - 1$ is denoted as $P(k)$, $k = 0, 1, \cdots, N_B - 1$.

In this embodiment, the available subcarrier set of symbols 2 is set S. The time-domain sequence generated by the base station using subset B of S (that is, the second-type subcarrier set) is $p(n)$, $n = 0, 1, \cdots, N - 1$ (the time-domain sequence corresponding to the second-type subcarrier set). According to the principle of generating OFDM signals, the following formula applies:

$$p(n) = \frac{1}{\sqrt{N}} \sum_{k=0}^{N_B - 1} P(k) e^{j\frac{2\pi G(k)n}{N}}, n = 0, 1, \cdots, N - 1.$$

Here $P(k)$ is a modulation symbol mapped to subcarrier $G(k)$. Here $G(k)$ belongs to subset B. It is set that the number of subcarriers in subset B is $N_B$.

For ease of description, the following vectors are defined:

$$P = [P(0), P(1) \cdots P(N_B - 1)]^T;$$

$$d = [s(0), s(1), \cdots, s(M - 1)]^T.$$

Column vector t is defined as follows:
When

$$M \leq L, \ t = [t(N - L), t(N - L + 1), \cdots, t(N - L + M - 1)]^T.$$

When $L < M < N$, $t = [t(N - L), t(N - L + 1), \cdots, t(N - 1), t(0), \ldots, t(N - L - 1)]^T.$

$$z = d - t.$$

T denotes the transpose. $t$ denotes the first time-domain sequence. P denotes the target signal. $d$ denotes the second time-domain sequence. *z* denotes the third time-domain sequence.

P is determined using the following formulas:

$$P = Q^H (QQ^H)^{-1} z;$$

$$Q = \frac{1}{\sqrt{N}} \begin{pmatrix} W_N^{-(N-M)G(0)} & W_N^{-(N-M)G(1)} & \cdots & W_N^{-(N-M)G(N_B-1)} \\ W_N^{-(N-M+1)G(0)} & W_N^{-(N-M+1)G(1)} & \cdots & W_N^{-(N-M+1)G(N_B-1)} \\ \cdots & \cdots & \cdots & \cdots \\ W_N^{-(N-1)G(0)} & W_N^{-(N-1)G(1)} & \cdots & W_N^{-(N-1)G(N_B-1)} \end{pmatrix},$$

$$W = \exp\left(-j\frac{2\pi}{N}\right).$$

Here Q denotes an $M * N_B$ matrix that can be obtained by extracting M rows and $N_B$ columns from the N-point inverse Fourier transform matrix. For example, here the rows extracted are from the (N - M)-th row to the (N - 1)-th row, and the column indexes extracted are subcarrier indexes $G(k)$, $k$ = 0, 1, $\cdots$ , $N_B$ - 1.

In this embodiment, by reserving not less than M subcarriers on symbols 2 and sending the preceding suggested signals on these subcarriers, the first M sample points on symbols 2 are cyclic extension of signals on symbols 1. In other words, the first M sample points of symbols 2 can be used as the cyclic suffixes of symbols 1. In an example, sending the suggested signals P on the second-type subcarriers minimizes the power used under certain conditions of matrix Q. Finally, according to this embodiment, the cyclic suffix length of the target signal can be increased or decreased with a granularity of a single sample point. The communication receiver may receive the communication signal by using the traditional cyclic prefix without modification, thereby maintaining good compatibility with existing systems.

In an embodiment, assuming that z = -t in the embodiment of FIG. 3 or FIG. 4, the vector P composed of signals carried by subcarriers in subset B is determined by the following formulas:

$$P = Q^H (QQ^H)^{-1} z;$$

$$Q = \frac{1}{\sqrt{N}} \begin{pmatrix} W_N^{-(N-M)G(0)} & W_N^{-(N-M)G(1)} & \cdots & W_N^{-(N-M)G(N_B-1)} \\ W_N^{-(N-M+1)G(0)} & W_N^{-(N-M+1)G(1)} & \cdots & W_N^{-(N-M+1)G(N_B-1)} \\ \cdots & \cdots & \cdots & \cdots \\ W_N^{-(N-1)G(0)} & W_N^{-(N-1)G(1)} & \cdots & W_N^{-(N-1)G(N_B-1)} \end{pmatrix};$$

$$W = \exp\left(-j\frac{2\pi}{N}\right).$$

For the embodiment of FIG. 3, it can be ensured that the last M sample points on OFDM symbols 1 are 0. This reduces the inter-symbol interference between signals on symbols 1 and signals on symbols 2, effectively extending the cyclic prefixes of the subsequent symbols 2. Moreover, according to the principles of OFDM signals, this results in some sample points at the front of the OFDM symbols (within the cyclic prefixes) being 0, thereby reducing the power overhead of the OFDM signals in terms of the cyclic prefixes.

For the embodiment shown in FIG. 4, the effect is similar to that of embodiment one, effectively extending the cyclic suffixes of symbols 1 and reducing the power overhead of the OFDM signals in terms of the cyclic prefixes. This is not described here again.

In an embodiment, vector d in the embodiment of FIG. 3 is defined as follows:

$$d = [s(N - L - M), s(N - L - M + 1), \cdots, s(N - L - 1)]^T.$$

Based on the embodiment shown in FIG. 3, d may be any signal of length M. d denotes, for example, a linear frequency modulation (LFM) signal, a constant amplitude zero autocorrelation (CAZAC) signal, or a certain signal having a cyclic prefix. The number of sample points of the LFM signal is M. The length of the CAZAC signal is M. For the certain signal having a cyclic prefix, the total number of sample points of the useful signal and the cyclic prefix is M.

In the embodiment of FIG. 3, the matrix Q is obtained by extracting M rows and $N_B$ columns from the N-point inverse Fourier transform matrix, for example, extracting the (N - M)-th row to the (N - 1)-th row and columns indexed $G(k), k = 0, 1, \cdots, N_B$ - 1 from the N-point inverse Fourier transform matrix. In an embodiment, any M rows may be extracted from the N-point inverse Fourier transform matrix. Without loss of generality, the extracted M rows are indexed $e(0), e(1), \cdots, e(M - 1)$. The achieved effect is as follows:

$$c\big(e(0)\big) = d(0)$$

$$c\big(e(1)\big) = d(1)$$

$$\cdots$$

$$c\big(e(M - 1)\big) = d(M - 1).$$

Here, $c(n)$ has the same meaning as in the embodiment shown in FIG. 3, representing the time-domain sequence corresponding to the useful part of the symbol.

In an embodiment, based on the embodiment of FIG. 3 or the embodiment of FIG. 4, if M = 1, at this time, after the subcarriers of subset A of set S are removed from set S, any $N_B(N_B \geq 1)$ available subcarriers may be selected to form subset B. It is set that the indexes of these subcarriers are $G(k), k = 0, 1, \cdots, N_B$ - 1, and the signals mapped to subcarrier $G(k)$ are $P(k), k = 0, 1, \cdots, N_B$ - 1. For ease of expression, the column vector P is defined here:

$$P = [P(0), P(1) \cdots P(N_B - 1)]^T.$$

P is determined using the following formula:

$$P = Q^H(QQ^H)^{-1}z = \frac{\sqrt{N}}{N_B} Q^H z;$$

$$P = Q^H(QQ^H)^{-1}z;$$

$$Q = \frac{1}{\sqrt{N}} (W_N^{-(N-1)G(0)},\ W_N^{-(N-1)G(1)}, \cdots, W_N^{-(N-1)G(N_B-1)}\ ),$$

$$W = \exp\left(-j\frac{2\pi}{N}\right).$$

Here the matrix Q refers to the last row of matrix Q of the embodiment of FIG. 3 or the embodiment of FIG. 4.

In an embodiment, based on the embodiment of FIG. 3 or the embodiment of FIG. 4, if M > 1, $N_B(N_B \geq M)$ available subcarriers may be selected from set S to form subset B. It is set that the indexes of these subcarriers are $G(k), k = 0, 1, \cdots, N_B$ - 1. The difference value between the index of the i-th subcarrier and the index of the j-th subcarrier is defined as $\Delta(i, j)$. Without loss of generality, only non-negative values are considered here.

$\Delta(i, j)$ satisfies the following formula: $\Delta(i, j) = |G(i) - G(j)|$.

Based on this definition, there are $C_{N_B}^2$ subcarrier difference values of N subcarriers. When subcarriers are selected, the difference values of the preferred subcarriers should satisfy one or more of the following conditions:

The difference value between some subcarrier indexes is an integer multiple of $\frac{N}{M}$. Ideally, $C_{N_S}^2$ difference values are all integer multiples of $\frac{N}{M}$ (here it is set that $\frac{N}{M}$ is an integer). For example, if N = 16 and M = 4, the selected subcarrier indexes are 0, 4, 8, and 12. The difference values between these subcarrier indexes are all integer multiples of $\frac{N}{M}$. When

$C_{N_B}^2$ difference values are all integer multiples of $\frac{N}{M}$, the column vector P in the embodiment of FIG. 3 or the embodiment of FIG. 4 may be determined using the following formula:

$$P = \frac{N}{N_B} Q^H z \; .$$

When $\frac{N}{M-1}$ is an even number, the difference value between some subcarrier indexes is an integer multiple of $\frac{N}{M-1}$.

The difference value between some subcarrier indexes, when divided by $\frac{N}{M}$ or $\frac{N}{M-1}$, has a remainder smaller than the preset threshold. Ideally, the difference value between $C_{N_B}^2$ subcarriers, when divided by $\frac{N}{M}$ or $\frac{N}{M-1}$, has a remainder smaller than the preset threshold, for example, less than 0.1.

$min[\Delta(i, j), N - \Delta(i, j)]$ is greater than the preset threshold, for example, greater than $\left\lfloor \frac{N}{10} \right\rfloor$.

In the embodiment of FIG. 3 or the embodiment of FIG. 4, when the elements of column vector z are random variables following Independent Identically Distribution, using the subcarrier reservation mechanism that satisfies the preceding conditions can significantly reduce power consumption while satisfying the design requirements.

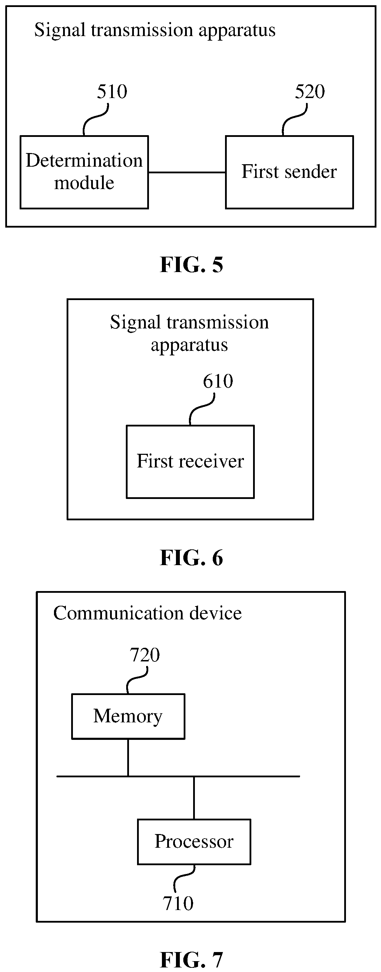

FIG. 5 is a block diagram of a signal transmission apparatus according to an embodiment of the present application. This embodiment is applied by a sending end. As shown in FIG. 5, the signal transmission apparatus of this embodiment includes a determination module 510 and a first sender 520.

The determination module 510 is configured to determine a first-type subcarrier set and a second-type subcarrier set among transmission symbols, where a second-type subcarrier carries a generated target signal, and a signal on a sample point of a sequence obtained from superposition of a time-domain sequence corresponding to the target signal and a time-domain sequence corresponding to a communication signal carried by a first-type subcarrier satisfies a preset feature.

The first sender 520 is configured to send the communication signal and the target signal carried by the transmission symbols to a receiving end.

In an embodiment, determining the target signal includes: obtaining a third time-domain sequence based on a generated first time-domain sequence and a generated second time-domain sequence, where the first time-domain sequence is a subset of the time-domain sequence corresponding to the communication signal carried by the first-type subcarrier, and the second time-domain sequence is a time-domain sequence determined based on the signal that satisfies the preset feature; and determining the target signal based on the third time-domain sequence and a pregenerated target matrix. The target matrix includes a first number of rows and a second number of columns extracted from a preset inverse Fourier transform matrix, where the first number is the length of the first time-domain sequence, the second time-domain sequence, or the third time-domain sequence, the second number is the number of second-type subcarriers in the second-type subcarrier set, and the second number is greater than or equal to the first number.

In an embodiment, the signal transmission apparatus applied to the sending end also includes a second sender.

The second sender is configured to send the number and subcarrier indexes of first-type subcarriers in the first-type subcarrier set and the number and subcarrier indexes of second-type subcarriers in the second-type subcarrier set to the receiving end.

In an embodiment, the signal that satisfies the preset feature includes one of the following: a linear frequency modulated signal, a constant amplitude zero autocorrelation signal, a signal having a cyclic prefix, a cyclic prefix extension of a first symbol after the transmission symbols, a cyclic suffix extension of a first symbol before the transmission symbols, or an all-zero signal.

In an embodiment, in response to the first number being 1, determining the first-type subcarrier set and the second-type subcarrier set among the transmission symbols includes acquiring all subcarriers among the transmission symbols to obtain a subcarrier set; and selecting a second number of subcarriers from a subcarrier complement set between the subcarrier set and a preconfigured first-type subcarrier set to obtain the second-type subcarrier set.

In an embodiment, in response to the first number being greater than 1, determining the first-type subcarrier set and the second-type subcarrier set among the transmission symbols includes acquiring all subcarriers among the transmission symbols to obtain a subcarrier set; and selecting a second number of subcarriers from the subcarrier set to obtain the second-type subcarrier set.

In an embodiment, a difference value between subcarrier indexes in the second-type subcarrier set satisfies one of the following conditions: an integer multiple of the ratio between the length of a time-domain sequence corresponding to a useful part of the transmission symbols and the number of subcarriers in the second-type subcarrier set; or an integer multiple of a ratio minus one, where the ratio is a ratio between the length of a time-domain sequence corresponding to a useful part of the transmission symbols and the number of subcarriers in the second-type subcarrier set.

The signal transmission apparatus of this embodiment is configured to implement the signal transmission method applied by the sending end according to the embodiment shown in FIG. 1. The implementation principles and technical effects of the signal transmission apparatus of this embodiment are similar to those of the signal transmission method applied by the sending end according to the embodiment shown in FIG. 1 and thus are not described again here.

FIG. 6 is a block diagram of a signal transmission apparatus according to an embodiment of the present application. This embodiment is applied by a receiving end. As shown in FIG. 6, the signal transmission apparatus of this embodiment includes a first receiver 610.

The first receiver 610 is configured to receive a communication signal and a target signal carried by transmission symbols and sent by a sending end.

The transmission symbols include a first-type subcarrier set and a second-type subcarrier set, and a second-type subcarrier in the second-type subcarrier set carries, a generated target signal, and a signal on a sample point of a sequence obtained from superposition of a time-domain sequence corresponding to the target signal and a time-domain sequence corresponding to the communication signal carried by a first-type subcarrier in the first-type subcarrier set satisfies a preset feature.

In an embodiment, the signal transmission apparatus applied to the receiving end also includes a second receiver.

The second receiver is configured to receive the number and subcarrier indexes of first-type subcarriers in the first-type subcarrier set and the number and subcarrier indexes of second-type subcarriers in the second-type subcarrier set sent by the sending end.

In an embodiment, determining the target signal includes obtaining a third time-domain sequence based on a generated first time-domain sequence and a generated second time-domain sequence, where the first time-domain sequence is a subset of the time-domain sequence corresponding to the communication signal carried by the first-type subcarrier, and the second time-domain sequence is a time-domain sequence determined based on the signal that satisfies the preset feature; and determining the target signal based on the third time-domain sequence and a pregenerated target matrix, where the target matrix is composed of a first number of rows and a second number of columns extracted from a preset inverse Fourier transform matrix, where the first number is the length of the first time-domain sequence, the second time-domain sequence, or the third time-domain sequence, the second number is the number of second-type subcarriers in the second-type subcarrier set, and the second number is greater than or equal to the first number.

In an embodiment, the signal that satisfies the preset feature includes one of the following: a linear frequency modulated signal, a constant amplitude zero autocorrelation signal, a signal having a cyclic prefix, a cyclic prefix extension of a first symbol after the transmission symbols, a cyclic suffix extension of a first symbol before the transmission symbols, or an all-zero signal.

The signal transmission apparatus of this embodiment is configured to implement the signal transmission method applied by the receiving end according to the embodiment shown in FIG. 2. The implementation principles and technical effects of the signal transmission apparatus of this embodiment are similar to those of the signal transmission method applied by the receiving end according to the embodiment shown in FIG. 2 and thus are not described again here.

FIG. 7 is a structural diagram of a communication device according to an embodiment of the present application. As shown in FIG. 7, the device of the present application includes a processor 710 and a memory 720. One or more processors 710 may be configured in the device. FIG. 7 uses one processor 710 as an example. One or more memories 720 may be configured in the device. FIG. 7 uses one memory 720 as an example. The processor 710 and the memory 720 of the device are connected by a bus or in other manners. FIG. 7 uses connection by a bus as an example. In this embodiment, the device may be a sending end. By way of example, the sending end may be a terminal or a base station.

As a computer-readable storage medium, the memory 720 may be configured to store software programs, computer-executable programs, and modules such as program instructions/modules corresponding to the device of any embodiment of the present application (for example, the determination module 510 and the first sender 520 in the signal transmission apparatus). The memory 720 may include a program storage region and a data storage region. The program storage region may store an operating system and an application program required by at least one function. The data storage region may store data created according to the use of the device. Additionally, the memory 720 may include a high-speed random-access memory or a nonvolatile memory such as at least one disk memory, a flash memory or another nonvolatile solid-state memory. In some examples, memories 720 remote from the processor 710 and connectable to the device via a network may be provided. Examples of the preceding network include, but are not limited to, the Internet, an intranet, a local area network, a mobile communication network and a combination thereof.

In the case where the communication device is the sending end, the preceding device may be configured to perform the signal transmission method applied by the sending end according to any previous embodiment and has corresponding functions and effects.

In the case where the communication device is the receiving end, the preceding device may be configured to perform the signal transmission method applied by the receiving end according to any previous embodiment and has corresponding functions and effects.

An embodiment of the present application provides a storage medium containing computer-executable instructions which, when executed by a computer processor, are configured to cause the computer processor to perform a signal transmission method applied by a sending end. The method includes determining a first-type subcarrier set and a second-type subcarrier set among transmission symbols, where a second-type subcarrier carries such a generated target signal that a signal on a sample point of a sequence obtained from superposition of a time-domain sequence corresponding to the target signal and a time-domain sequence corresponding to a communication signal carried by a first-type subcarrier satisfies a preset feature; and sending the communication signal and the target signal carried by the transmission symbols to a receiving end.

An embodiment of the present application provides a storage medium containing computer-executable instructions which, when executed by a computer processor, are configured to cause the computer processor to perform a signal transmission method applied by a receiving end. The method includes receiving a communication signal and a target signal carried by transmission symbols and sent by a sending end. The transmission symbols include a first-type subcarrier set and a second-type subcarrier set, and a second-type subcarrier in the second-type subcarrier set carries such a generated target signal that a signal on a sample point of a sequence obtained from superposition of a time-domain sequence corresponding to the target signal and a time-domain sequence corresponding to the communication signal carried by a first-type subcarrier in the first-type subcarrier set satisfies a preset feature.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The above are only preferred embodiments of the present application and are not intended to limit the present application, and for those skilled in the art, the present application may have various modifications and variations. Any modifications, equivalent substitutions, improvements and the like made within the spirit and principle of the present application should fall within the scope of the present application.

**Claims**

1. A signal transmission method, the method being applied by a sending end and comprising:

   determining a first-type subcarrier set and a second-type subcarrier set among transmission symbols, wherein a second-type subcarrier carries a generated target signal, a signal on a sample point of a sequence obtained from superposition of a time-domain sequence corresponding to the target signal and a time-domain sequence corresponding to a communication signal carried by a first-type subcarrier satisfies a preset feature; and

sending the communication signal and the target signal carried by the transmission symbols to a receiving end.

2. The method of claim 1, wherein determining the target signal comprises:

obtaining a third time-domain sequence based on a generated first time-domain sequence and a generated second time-domain sequence, wherein the first time-domain sequence is a subset of the time-domain sequence corresponding to the communication signal carried by the first-type subcarrier, and the second time-domain sequence is a time-domain sequence determined based on the signal that satisfies the preset feature; and determining the target signal based on the third time-domain sequence and a pregenerated target matrix, wherein the target matrix comprises: a first number of rows and a second number of columns extracted from a preset inverse Fourier transform matrix, wherein the first number is a length of the first time-domain sequence, the second time-domain sequence, or the third time-domain sequence, the second number is a number of second-type subcarriers in the second-type subcarrier set, and the second number is greater than or equal to the first number.

3. The method of claim 1, further comprising:
sending a number of first-type subcarriers and subcarrier indexes of the first-type subcarriers in the first-type subcarrier set and a number of second-type subcarriers and subcarrier indexes of the second-type subcarriers in the second-type subcarrier set to the receiving end.

4. The method of claim 1, wherein the signal that satisfies the preset feature comprises one of the following: a linear frequency modulated signal, a constant amplitude zero autocorrelation signal, a signal having a cyclic prefix, a cyclic prefix extension of a first symbol after the transmission symbols, a cyclic suffix extension of a first symbol before the transmission symbols, or an all-zero signal.

5. The method of claim 1 or 2, wherein in response to the first number being equal to 1, determining the first-type subcarrier set and the second-type subcarrier set among the transmission symbols comprises:

acquiring all subcarriers among the transmission symbols to obtain a subcarrier set; and
selecting a second number of subcarriers from a subcarrier complement set between the subcarrier set and a preconfigured first-type subcarrier set to obtain the second-type subcarrier set.

6. The method of claim 1 or 2, wherein in response to the first number being greater than 1, determining the first-type subcarrier set and the second-type subcarrier set among the transmission symbols comprises:

acquiring all subcarriers among the transmission symbols to obtain a subcarrier set; and
selecting a second number of subcarriers from the subcarrier set to obtain the second-type subcarrier set.

7. The method of claim 6, wherein a difference value between subcarrier indexes in the second-type subcarrier set satisfies one of the following conditions: an integer multiple of a ratio between a length of a time-domain sequence corresponding to a useful part of the transmission symbols and the number of subcarriers in the second-type subcarrier set; or an integer multiple of a ratio minus one, wherein the ratio is a ratio between a length of a time-domain sequence corresponding to a useful part of the transmission symbols and the number of subcarriers in the second-type subcarrier set.

8. A signal transmission method, the method being applied by a receiving end and comprising:

receiving a communication signal and a target signal carried by transmission symbols and sent by a sending end, wherein
the transmission symbols comprise a first-type subcarrier set and a second-type subcarrier set, and a second-type subcarrier in the second-type subcarrier set carries such a generated target signal that a signal on a sample point of a sequence obtained from superposition of a time-domain sequence corresponding to the target signal and a time-domain sequence corresponding to the communication signal carried by a first-type subcarrier in the first-type subcarrier set satisfies a preset feature.

9. The method of claim 8, further comprising:
receiving a number and subcarrier indexes of first-type subcarriers in the first-type subcarrier set and a number and subcarrier indexes of second-type subcarriers in the second-type subcarrier set sent by the sending end.

10. A communication device, comprising a memory and one or more processors, wherein

> the memory is configured to store one or more programs; and
> when executed by the one or more processors, the one or more programs cause the one or more processors to perform the method of any one of claims 1 to 7 or the method of claim 8 or 9.

11. A storage medium storing a computer program which, when executed by a processor, causes the processor to perform the method of any one of claims 1 to 7 or the method of claim 8 or 9.

Determine a first-type subcarrier set and a second-type subcarrier set among transmission symbols ⌇ S110

Send the communication signal and the target signal carried by the transmission symbols to a receiving end ⌇ S120

**FIG. 1**

Receive a communication signal and a target signal carried by transmission symbols and sent by a sending end ⌇ S210

**FIG. 2**

Symbol 1                                    Symbol 2

| c(N-L)...c(N-1) | c(0),c(1)...c(N-1) | s(N-L)...s(N-1) | s(0),s(1)...s(N-1) |
|---|---|---|---|

**FIG. 3**

Symbol 1                                    Symbol 2

| s(N-L)...s(N-1) | s(0),s(1)...s(N-1) | c(N-L)...c(N-1) | c(0),c(1)...c(N-1) |
|---|---|---|---|

**FIG. 4**

Signal transmission apparatus

510

520

Determination module

First sender

**FIG. 5**

Signal transmission apparatus

610

First receiver

**FIG. 6**

Communication device

720

Memory

Processor

710

**FIG. 7**

<table>
<tr><td colspan="2" align="center">**INTERNATIONAL SEARCH REPORT**</td><td>International application No.<br>**PCT/CN2023/090815**</td></tr>
</table>

**A.    CLASSIFICATION OF SUBJECT MATTER**

H04L27/26(2006.01)i

According to International Patent Classification (IPC) or to both national classification and IPC

**B.    FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, VEN, WPABS, ENTXT, VCN, 3GPP, CNKI, IEEE: 子载波集合, 时域, 序列, 矩阵, 逆傅里叶变换, 索引, 循环前缀, 循环后缀, 通感一体化, 感知距离, subcarrier, time domain, matrix, FFT, IFFT, cyclic prefix, cyclic suffix, ISAC, sensing, communication

**C.    DOCUMENTS CONSIDERED TO BE RELEVANT**

| Category* | Citation of document, with indication, where appropriate, of the relevant passages | Relevant to claim No. |
|---|---|---|
| X | CN 101346959 A (QUALCOMM INC.) 14 January 2009 (2009-01-14)<br>    description, pages 4-8 and 11 | 1-11 |
| X | CN 114726697 A (BEIJING UNIVERSITY OF POSTS AND TELECOMMUNICATIONS) 08 July 2022 (2022-07-08)<br>    description, paragraphs [0070]-[0102] | 1-11 |
| A | CN 114584988 A (HUAWEI TECHNOLOGIES CO., LTD.) 03 June 2022 (2022-06-03)<br>    entire document | 1-11 |
| A | CN 109412764 A (HUAWEI TECHNOLOGIES CO., LTD.) 01 March 2019 (2019-03-01)<br>    entire document | 1-11 |
| A | US 2019312766 A1 (QUALCOMM INC.) 10 October 2019 (2019-10-10)<br>    entire document | 1-11 |
| A | LIU, An et al. "A Survey on Fundamental Limits of Integrated Sensing and Communication"<br>*IEEE Communications Surveys & Tutorials*, Vol. 24, No. 2, 07 February 2022 (2022-02-07),<br>    entire document | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 August 2023** | **09 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

| International application No. |
|---|
| **PCT/CN2023/090815** |

| Patent document cited in search report | | | Publication date (day/month/year) | Patent family member(s) | | | Publication date (day/month/year) |
|---|---|---|---|---|---|---|---|
| CN | 101346959 | A | 14 January 2009 | WO | 2007050921 | A2 | 03 May 2007 |
| | | | | US | 2007147226 | A1 | 28 June 2007 |
| | | | | WO | 2007050921 | A3 | 02 August 2007 |
| | | | | EP | 1941691 | A2 | 09 July 2008 |
| | | | | KR | 20080070707 | A | 30 July 2008 |
| | | | | JP | 2009514397 | W | 02 April 2009 |
| | | | | KR | 101024726 | B1 | 24 March 2011 |
| | | | | JP | 2012010351 | A | 12 January 2012 |
| | | | | EP | 2592804 | A1 | 15 May 2013 |
| | | | | JP | 5539278 | B2 | 02 July 2014 |
| | | | | JP | 2014161013 | A | 04 September 2014 |
| | | | | JP | 5911900 | B2 | 27 April 2016 |
| | | | | CN | 105656611 | A | 08 June 2016 |
| | | | | JP | 6208172 | B2 | 04 October 2017 |
| | | | | EP | 1941691 | B1 | 21 August 2019 |
| | | | | CN | 105656611 | B | 25 October 2019 |
| | | | | EP | 2592804 | B1 | 25 December 2019 |
| CN | 114726697 | A | 08 July 2022 | | None | | |
| CN | 114584988 | A | 03 June 2022 | WO | 2022110923 | A1 | 02 June 2022 |
| CN | 109412764 | A | 01 March 2019 | US | 2020187190 | A1 | 11 June 2020 |
| | | | | EP | 3654568 | A1 | 20 May 2020 |
| | | | | EP | 3654568 | A4 | 08 July 2020 |
| | | | | EP | 3654568 | B1 | 25 May 2022 |
| | | | | WO | 2019033959 | A1 | 21 February 2019 |
| US | 2019312766 | A1 | 10 October 2019 | EP | 3777065 | A1 | 17 February 2021 |
| | | | | US | 11121902 | B2 | 14 September 2021 |
| | | | | WO | 2019195290 | A1 | 10 October 2019 |
| | | | | CN | 111919426 | A | 10 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211033097